# NOUVEAU FASCICULE DE BREVET EUROPEEN

(11) **EP 2 516 339 B2**
(45) Date de publication et mention de la décision concernant l'opposition: **22.11.2023**
(45) Mention de la délivrance du brevet: 20.02.2019
(21) Numéro de dépôt: 10801649.4
(22) Date de dépôt: 10.12.2010
(51) Int. Cl.: C03B 37/04

(54) **CENTRIFUGEUR DE FIBRAGE, DISPOSITIF ET PROCÉDÉ DE FORMATION DE FIBRES MINÉRALES**
FASERSTRUKTURZENTRIFUGE SOWIE VORRICHTUNG UND VERFAHREN ZUR HERSTELLUNG VON MINERALFASERN
FIBER STRUCTURE CENTRIFUGE, AND DEVICE AND METHOD FOR FORMING MINERAL FIBERS

(30) Priorité: 22.12.2009 FR 0959393
(43) Date de publication de la demande: 31.10.2012
(73) Titulaire: SAINT-GOBAIN ISOVER, 92400 Courbevoie (FR)
(72) Inventeur: BOULANOV, Oleg, F-60180 Nogent sur Oise (FR); BERNARD, Jean-Luc, F-60600 Breuil le Vert (FR)
(74) Mandataire: Saint-Gobain Recherche
(86) Numéro de dépôt international: PCT/FR2010/052665
(87) Numéro de publication internationale: WO 2011/083227

(56) Documents cités:
- EP-A1- 0 583 792
- US-A- 3 622 293
- US-A- 5 312 469
- US-A- 5 554 324

## Description

L'invention concerne un dispositif de formation de fibres minérales comprenant un centrifugeur de fibrage, encore appelé assiette de fibrage, qui permet de former des fibres minérales ou d'autres matériaux thermoplastiques, par un procédé de centrifugation interne associée à un étirage par un courant gazeux à haute température. Elle s'applique notamment à la production industrielle de laine de verre destinée à entrer par exemple dans la composition de produits d'isolation thermique et/ou acoustique.

Un filet de verre fondu est introduit dans un centrifugeur de fibrage tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz. On nomme « centrifugation interne » ce procédé.

Ce procédé a fait l'objet de nombreux perfectionnements, portant notamment pour certains sur l'assiette de fibrage, pour d'autres sur les moyens de générer le courant annulaire d'étirage, par exemple grâce à des brûleurs de type particulier. Voir notamment les documents EP-B-0 189 354, EP-B-0 519 797, WO-A-97/15532 concernant ce dernier point.

Concernant l'assiette de fibrage, le document FR-A-1 382 917 décrit un organe de fibrage dont le principe est toujours abondamment utilisé : la matière fondue est amenée dans un panier comportant sur sa paroi verticale des orifices à travers lesquels la matière est projetée sur la paroi d'un corps tournant, solidaire du panier, et comportant un grand nombre d'orifices. On nomme « bande » de l'assiette de fibrage cette paroi. Afin d'obtenir un fibrage de qualité, les orifices sont répartis sur des rangées annulaires et les diamètres des orifices sont variables suivant la rangée à laquelle ils appartiennent, ce diamètre allant en diminuant depuis le haut de la bande jusqu'à sa partie inférieure.

Des améliorations ont été apportées à ce principe de base, comme enseigné notamment dans le document FR-A-2 443 436, où des moyens permettent d'obtenir un écoulement laminaire de la matière fondue du haut vers le bas de la bande de l'assiette.

Une autre modification, décrite dans le document EP-A-1 370 496, a été apportée pour améliorer la qualité des fibres et l'augmenter le rendement. Il s'agit de répartir les orifices de la bande en une pluralité de zones annulaires disposées les unes au-dessus des autres, avec au moins deux zones annulaires ayant un nombre d'orifices par unité de surface qui est différent d'une valeur supérieure ou égale à 5 %.

Dans l'ensemble de ces exemples, la bande périphérique de l'assiette est chauffée à la fois par le verre fondu qui est centrifugé dans l'assiette de fibrage et par l'air chaud soufflé par le brûleur générant le courant annulaire d'étirage.

Toutefois, le chauffage par le brûleur est une source de consommation énergétique importante.

Il y a donc un besoin pour un centrifugeur de fibrage qui permette d'améliorer la consommation énergétique d'un dispositif de fibrage muni de ce centrifugeur.

Pour cela, l'invention propose un dispositif de formation de fibre minérales selon la revendication 1.

Selon une autre particularité, la distance entre deux reliefs discontinus adjacents d'une rangée est constante.

Selon une autre particularité, le diamètre de la cavité semi-sphérique est compris entre 1 et 4 mm.

L'invention propose également un procédé de formation de fibres minérales par centrifugation interne associée à un étirage gazeux à haute température, mettant en oeuvre le dispositif de formation de fibres minérales décrit ci-dessus, dans lequel le matériau à fibrer est déversé dans le centrifugeur.

L'invention propose également une utilisation du dispositif selon la revendication 1 ou du procédé selon la revendication 4.

D'autres caractéristiques et avantages de l'invention vont à présent être décrits en regard des dessins sur lesquels :
- La figure 1 représente une vue en coupe d'un dispositif de formation de fibres minérales présentant des reliefs non confirmes à l'invention ;
- La figure 2 représente une vue en coupe d'un centrifugeur de fibrage selon un mode de réalisation ne faisant pas partie de l'invention ;
- La figure 3 représente une vue de dessus à plat de trois rangées de reliefs cylindriques, les reliefs de deux rangées adjacentes étant alignés radialement, selon un mode de réalisation ne faisant pas partie de l'invention ;
- La figure 4 représente une vue de dessus à plat de trois rangées de reliefs cylindriques, forme non conforme à l'invention, les reliefs de deux rangées adjacentes étant en quinconce ;
- La figure 5 représente une vue en coupe verticale (lorsque le centrifugeur est en position de centrifugation) d'un relief en forme de picot selon un mode de réalisation ne faisant pas partie de l'invention ;
- La figure 6 représente une vue en coupe transversale d'un relief en forme de cavité semi-sphérique ;
- La figure 7 représente une vue de dessus d'un relief en forme de cavité semi-sphérique ;
- Les figures 8a et 8b représentent respectivement une vue en coupe transversale et une vue de dessus d'un détail du centrifugeur comprenant trois rangées de picots cylindriques, les picots de deux rangées adjacentes étant en quinconce selon un mode de réalisation ne faisant pas partie de l'invention ;
- Les figures 9a et 9b représentent respectivement une vue en coupe transversale et une vue de dessus d'un détail du centrifugeur comprenant huit rangées de cavités semi-sphériques, les cavités semi-sphériques de deux rangées adjacentes étant en quinconce ;
- Les figures 10a et 10b représentent respectivement une vue en coupe transversale et une vue de dessus d'un détail du centrifugeur comprenant deux rangées de picots de section carrée, les picots de deux rangées adjacentes étant en quinconce et de hauteur différente selon un mode de réalisation ne faisant pas partie de l'invention ;
- La figure 11 représente une vue de dessus d'un détail du centrifugeur comprenant trois rangées de picots de section carrée, les picots de deux rangées adjacentes étant alignés radialement selon un mode de réalisation ne faisant pas partie de l'invention ;
- Les figures 12a et 12b représentent respectivement une vue en coupe transversale et une vue de dessus d'un détail du centrifugeur comprenant deux rangées de picots de section en losange et une rangée de picots de section triangulaire, les picots de deux rangées adjacentes étant en quinconce selon un mode de réalisation ne faisant pas partie de l'invention .

Les numéros de référence qui dont identiques sur les différentes figures représentent des éléments identiques ou similaires.

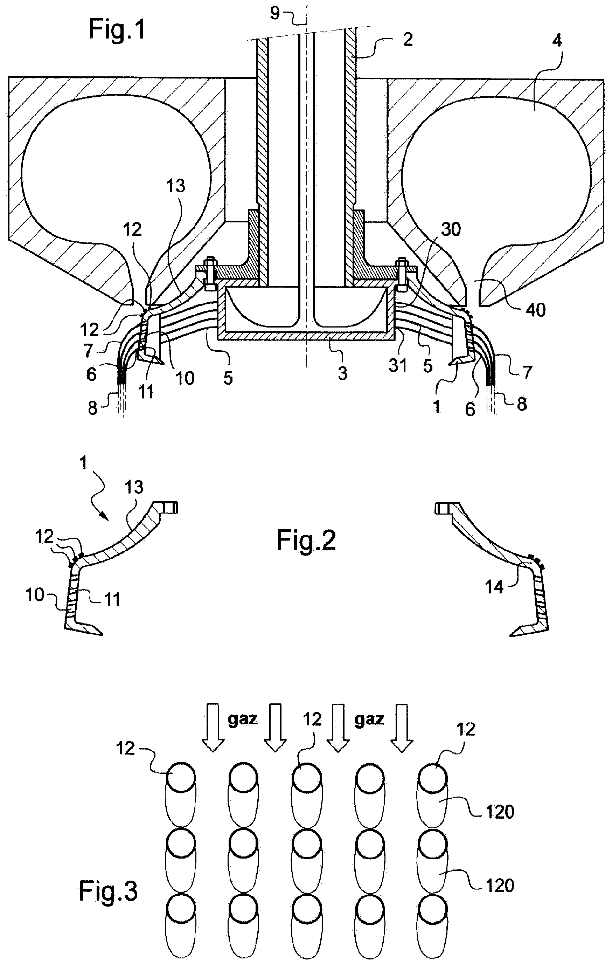

On définit le « haut », le « bas », le « dessus » et le « dessous » par rapport à un axe vertical lorsque le centrifugeur est en position de centrifugation, c'est-à-dire lorsque l'axe de rotation du centrifugeur est selon un axe vertical, comme sur les figures 1 et 2.

L'invention comprend un centrifugeur de fibrage adapté à tourner autour d'un axe de rotation. Le centrifugeur comprend une paroi annulaire percée d'une pluralité d'orifices. Cette paroi annulaire est symétrique par rapport à l'axe de rotation du centrifugeur. Le centrifugeur comprend également une rangée d'un relief continu, ne faisant pas partie de l'invention, ou de reliefs discontinus, qui est située sur la surface externe du centrifugeur, sur la paroi annulaire et/ou au-dessus et à proximité de la paroi annulaire lorsque le centrifugeur est en position de centrifugation. La rangée est horizontale ou inclinée d'un angle supérieur à 0° et inférieur à 90° par rapport à l'horizontale lorsque le centrifugeur est en position de centrifugation

Ainsi, la rangée d'un relief continu selon un mode de réalisation ne faisant pas partie de l'invention ou de reliefs discontinus est à proximité de la sortie du brûleur, dans le jet de gaz qui sort du brûleur. Les reliefs créent des turbulences qui permettent le brassage du gaz à proximité des reliefs, ce qui permet d'améliorer les échanges thermiques entre la sortie du brûleur et la surface du centrifugeur, en particulier la paroi annulaire du centrifugeur. Ainsi, pour une puissance de chauffage de brûleur identique par rapport à un centrifugeur sans reliefs, la température de la paroi annulaire du centrifugeur est augmentée. De même, en diminuant la puissance de chauffage du brûleur, une température de la paroi annulaire du centrifugeur identique par rapport à un centrifugeur sans reliefs peut être obtenue.

La consommation énergétique du dispositif de fibrage comprenant un tel centrifugeur est donc améliorée.

Le centrifugeur est destiné à être incorporé dans un dispositif de formation de fibres minérales.

La figure 1 représente une vue en coupe d'un dispositif de formation de fibres minérales présentant des reliefs non conformes à l'invention.

Le dispositif de formation de fibres minérales comprend un centrifugeur 1 comportant une paroi annulaire 10 percée d'une pluralité d'orifices 11. Le centrifugeur comprend également un voile 13. Le voile 13 forme le dessus du centrifugeur 1, entre la paroi annulaire et la tulipe. Le dispositif de formation de fibres minérales comprend également un arbre 2 d'axe 9 destiné à être entraîné en rotation par un moteur (non représenté). Le centrifugeur 1 est fixé à l'arbre 2 via la tulipe, qui est dans le prolongement du voile. Lorsque le dispositif de formation de fibres minérales est en position de fibrage, l'axe 9 est vertical.

L'arbre 2 est creux. A son extrémité supérieure, l'arbre 2 est relié à des moyens d'alimentation en verre fondu. A son extrémité inférieure, l'arbre 2 est relié à un panier 3. Le panier 3 est situé à l'intérieur du centrifugeur 1, comme cela est visible sur la figure 1. Le panier 3, fixé sur l'arbre 2, est destiné à être entraîné en rotation avec le centrifugeur 1 et l'arbre 2. Le panier 3 comprend une paroi annulaire 30 percée d'une pluralité d'orifices 31.

Lorsque le dispositif de formation de fibres minérales est en fonctionnement, le centrifugeur 1, l'arbre 2 et le panier 3 sont entraînés en rotation autour de l'axe de l'arbre 2. Du verre fondu s'écoule dans l'arbre, 2 depuis les moyens d'alimentation en verre fondu, jusqu'au panier 3, dans lequel se répand le verre fondu. Sous l'effet de la rotation, le verre fondu est projeté sur la paroi annulaire 30 du panier 3, passe par la pluralité d'orifices 31 (de diamètre compris entre environ 1,5 mm et 3 mm) du panier 3 et, sous forme de filaments volumineux 5 (de l'ordre de 2 mm de diamètre), est projeté sur la paroi périphérique 10, usuellement nommée « bande », du centrifugeur 1. Une réserve permanente de verre fondu se forme alors dans le centrifugeur pour venir alimenter la pluralité d'orifices 11 percés dans la paroi annulaire 10 du centrifugeur 1. Du verre fondu passe par la pluralité d'orifices 11 (de diamètre compris entre environ 0,5 mm et 1 mm) du centrifugeur 1 pour former des cônes d'écoulement 6 se prolongeant en avant-fibres 7.

Le dispositif de formation de fibres minérales comprend également au moins un brûleur annulaire 4 générant un jet d'étirage gazeux à haute température. Le jet d'étirage gazeux est un courant gazeux à haute température (typiquement 1350°C à 1600°C), qui sort du brûleur annulaire 4 par sa sortie 40, de telle sorte que le jet d'étirage gazeux soit tangentiel à la paroi annulaire 10 du centrifugeur 1. En position de fibrage, la sortie 40 du brûleur annulaire 4 est située au-dessus de la paroi annulaire 10 du centrifugeur 1.

Le brûleur annulaire est par exemple selon l'enseignement des documents EP-A-0 189 354, EP-A-0 519 797 ou EP-A-1 474 636 de la demanderesse. Sous l'action du jet d'étirage gazeux, les avant-fibres 7 s'étirent, leur portion terminale générant des fibres 8 discontinues ensuite collectées sous le centrifugeur.

Le dispositif de fibrage comporte également de façon optionnelle une couronne d'induction sous le centrifugeur et/ou un brûleur interne (non représentés) pour chauffer la zone la plus basse du centrifugeur et éviter ou limiter la création d'un gradient de température sur la hauteur du centrifugeur.

La figure 2 représente une vue en coupe d'un centrifugeur 1 présentant des reliefs non conformes à l'invention.

Comme mentionné plus haut, le centrifugeur 1 est adapté à tourner autour d'un axe 9 de rotation et comprend une paroi annulaire 10 percée d'une pluralité d'orifices 11. La paroi annulaire 10 a pour axe de symétrie l'axe 9 de rotation du centrifugeur. La pluralité d'orifices 11 permet de former les cônes d'écoulement 6, qui s'étirent en avant-fibres 7, puis deviennent des fibres 8 sous l'effet du jet d'étirage gazeux, comme expliqué plus haut.

De nombreux paramètres influent sur les dimensions et la résistance à la traction des fibres, qui déterminent la qualité des fibres. Différentes qualités de fibres peuvent être intéressantes à utiliser en fonction des applications. Par exemple, pour des applications nécessitant une bonne résistance en compression ou encore une bonne acoustique, on préférera des fibres courtes et cassantes. En revanche, pour des applications nécessitant une bonne résistance thermique, on préférera des fibres longues et soyeuses. Les paramètres qui influent sur la qualité des fibres sont entre autres la composition des fibres, la température de la paroi annulaire 10 du centrifugeur 1 et la température du jet d'étirage gazeux provenant de la sortie 40 du brûleur annulaire 4. Le jet d'étirage gazeux provenant de la sortie 40 du brûleur annulaire 4 sert à la fois à chauffer la paroi annulaire 10 et à étirer les fibres. La paroi annulaire 10 est également chauffée par le verre fondu accumulé contre la paroi interne de la paroi annulaire 10. La température de la paroi annulaire 10 du centrifugeur 1 dépend donc à la fois de la température du verre fondu accumulé dans le centrifugeur et de la température du jet d'étirage gazeux.

La température de la paroi annulaire 10 du centrifugeur 1 doit être suffisamment élevée pour empêcher la cristallisation du verre fondu dans les orifices 11 de la paroi annulaire 10. Autrement, les orifices 11 risquent de se boucher et le centrifugeur 1 deviendra vite inutilisable.

La température de cristallisation du verre dépend de sa composition chimique. En particulier, pour des fibres avec une forte teneur en alumine, la température de cristallisation est élevée. Or, plus la température de cristallisation est élevée, plus la température de la paroi annulaire du centrifugeur doit être importante. Une température très élevée du jet d'étirage gazeux demande beaucoup d'énergie et fragilise la surface externe du centrifugeur. De plus, une température élevée du jet d'étirage gazeux ne permet de fabriquer que des fibres courtes et cassantes. Pour pourvoir fabriquer des fibres longues et soyeuses, il est important que la température du jet d'étirage gazeux ne soit pas trop élevée. Il est donc important de pouvoir mieux transmettre la chaleur du jet d'étirage gazeux à la surface de la paroi annulaire 10 du centrifugeur 1 afin d'éviter que la température du jet d'étirage gazeux soit trop élevée tout en assurant une température suffisante à la paroi annulaire 10 du centrifugeur 1 pour éviter la cristallisation.

Pour les fibres à plus faible teneur en alumine, le centrifugeur selon l'invention est également intéressant puisqu'il permet de fabriquer des fibres longues et soyeuses en économisant de l'énergie.

Pour améliorer le transfert de chaleur du jet d'étirage gazeux à la surface de la paroi annulaire 10 du centrifugeur 1, le centrifugeur 1 comporte sur sa surface extérieure un relief continu ou plusieurs reliefs discontinus 12. Ce ou ces relief(s) ou aspérité(s) permet(tent) d'améliorer les échanges thermiques entre l'atmosphère entourant le centrifugeur 1, à proximité du ou des relief(s), et la surface du centrifugeur, également à proximité du ou des relief(s). L'échange thermique étant amélioré, cela permet de diminuer la température du jet de gaz d'étirage sans que la température de la paroi annulaire 10 ne soit diminuée. Ainsi, pour une même température de paroi annulaire, l'échange thermique au niveau du ou des relief(s) ou aspérité(s) du centrifugeur peut être augmenté jusqu'à 40% avec un centrifugeur selon l'invention.

Le centrifugeur 1 comporte un arrondi 14 entre la paroi annulaire 10 et le voile 13. Le ou les relief(s) 12 est(sont) disposé(s) sur la zone d'action du brûleur sur le centrifugeur 1, à savoir la zone du centrifugeur qui est chauffée par le jet d'étirage gazeux. Le relief continu et/ou les reliefs discontinus est(sont) ainsi disposé(s) selon au moins une rangée sur la paroi annulaire 10 et/ou au-dessus de la paroi annulaire 10 lorsque le centrifugeur 1 est en position de centrifugation. Ainsi, de préférence, au moins une rangée d'un relief continu et/ou de reliefs discontinus 12 est disposée sur l'arrondi 14 entre la paroi annulaire 10 et le voile 13 et/ou sur la paroi annulaire 10. Les autres rangées d'un relief continu et/ou de reliefs discontinus peuvent être disposées sur le voile 13, à proximité de la rangée disposée sur l'arrondi 14, comme représenté sur les figures 1 et 2 et/ou sur la paroi annulaire 10. L'ensemble des reliefs est donc sur ou à proximité de la paroi annulaire 10 du centrifugeur 1. Chaque rangée est annulaire, à savoir horizontale lorsque le centrifugeur est en position de centrifugation, ou inclinée d'un angle supérieur à 0° et inférieur à 90° par rapport à l'horizontale lorsque le centrifugeur est en position de centrifugation.

Le ou les reliefs 10 est(sont) ainsi à proximité de la sortie 40 du brûleur annulaire 4, qui est située légèrement au-dessus de la paroi annulaire 10 du centrifugeur 1 (comme cela est visible en particulier sur la figure 1), le brûleur projetant un courant gazeux tangentiel à la paroi annulaire 10. Le ou les relief(s) est(sont) ainsi parfaitement placés pour améliorer l'échange thermique entre le gaz sortant du brûleur annulaire 4 et la paroi annulaire 10 du centrifugeur.

Le centrifugeur 1 comprend de préférence plusieurs rangées d'un relief continu selon un mode de réalisation ne faisant pas partie de l'invention et/ou de reliefs discontinus, qui sont parallèles entre elles. Cela permet d'améliorer l'échange thermique par rapport à un centrifugeur à une seule rangée. Pour une même température du jet d'étirage à la sortie 40 du brûleur annulaire 4, la température de la paroi annulaire est ainsi plus élevée (donc la paroi annulaire est mieux chauffée) si le centrifugeur comporte plusieurs rangées de reliefs plutôt qu'une seule.

De préférence, dans le cas de reliefs discontinus, la distance entre deux reliefs 12 adjacents d'une même rangée est constante. Les reliefs discontinus 12 étant répartis régulièrement, l'échange thermique entre le courant gazeux à haute température sortant du brûleur annulaire 4 et la surface extérieure de la paroi annulaire 10 du centrifugeur est le plus homogène possible sur toute la périphérie de la paroi annulaire 10.

De même, lorsque le centrifugeur comporte plusieurs rangées d'un relief continu selon un mode de réalisation ne faisant pas partie de l'inventio et/ou de reliefs discontinus, la distance entre deux rangées adjacentes est constante, ce qui permet également d'homogénéiser l'échange thermique.

Comme expliqué plus haut, il existe un gradient de température entre le gaz provenant du brûleur annulaire 4 et l'air situé à proximité de la surface externe du centrifugeur 1. Les reliefs engendrent des turbulences dans le jet d'étirage gazeux, ce qui permet un brassage du gaz provenant du brûleur annulaire 4 et de l'air situé à proximité de la surface externe du centrifugeur 1. Ce brassage facilite l'échange thermique entre le gaz du brûleur annulaire 4 et la surface externe du centrifugeur, à proximité des reliefs, donc sur ou à proximité de la paroi annulaire 10 du centrifugeur 1. Ce brassage se produit sur une hauteur déterminée au dessus de la surface externe du centrifugeur 1, hauteur qui dépend entre autres de la forme et des dimensions des reliefs, du positionnement des reliefs les uns par rapport aux autres et de la distance entre eux.

Le ou les relief(s) ou aspérité(s) sont en saillie selon un mode de réalisation ne faisant pas partie de l'invention ou en creux par rapport à la surface externe du centrifugeur. Le ou les relief(s) ou aspérité(s) en creux ne sont pas traversants afin de conserver une bonne tenue mécanique du centrifugeur.

Ainsi, le ou les relief(s) ou aspérité(s) discontinu(e)s sont par exemple des picots selon un mode de réalisation ne faisant pas partie de l'invention , des cavités semi-sphériques, des nervures selon un mode de réalisation ne faisant pas partie de l'invention ou encore des rainures selon un mode de réalisation ne faisant pas partie de l'invention. Une rangée de reliefs discontinus peut comprendre des reliefs d'une ou plusieurs de ces quatre catégories : des picots selon un mode de réalisation ne faisant pas partie de l'invention et/ou des cavités semi-sphériques et/ou des nervures selon un mode de réalisation ne faisant pas partie de l'invention et/ou des rainures selon un mode de réalisation ne faisant pas partie de l'invention.

Les reliefs discontinus peuvent avoir différentes formes en fonction du résultat recherché : mieux chauffer l'arrondi 14 ou moins perturber le jet d'étirage gazeux. Ainsi, les rainures discontinues ont de préférence, en coupe transversale, la forme d'un demi-cercle. Le diamètre du demi-cercle est de préférence compris entre 1 mm et 4 mm. Les nervures discontinues ont, en coupe transversale, tout type de formes, par exemple carrée, triangulaire, arrondie ou trapézoïdale. La hauteur de la nervure est de préférence comprise entre 1 mm et 5 mm.

Un relief continu selon un mode de réalisation ne faisant pas partie de l'invention est par exemple une rainure unique qui fait tout le tour du centrifugeur et qui, en coupe transversale, a la forme d'un demi-cercle ou encore une nervure unique qui fait tout le tour du centrifugeur et qui, en coupe transversale, a une forme carrée, triangulaire, arrondie ou trapézoïdale. Le diamètre du demi-cercle est de préférence compris entre 1 mm et 4 mm. La hauteur de la nervure est de préférence comprise entre 1 mm et 5 mm.

La figure 3 représente une vue de dessus à plat de trois rangées de reliefs discontinus cylindriques selon un mode de réalisation ne faisant pas partie de l'invention. Sur cette figure, les reliefs discontinus 12 de deux rangées adjacentes sont alignés radialement. On voit que les zones de turbulences de trois reliefs discontinus 12 alignés radialement se chevauchent partiellement, ce qui permet d'augmenter l'échange thermique radialement.

Lorsque les reliefs discontinus sont des picots selon un mode de réalisation ne faisant pas partie de l'invention, comme par exemple sur les figures 1, 2, 5, 8a, 8b, 10a, 10b, 11 et 12, les picots constituent un obstacle à l'étirage et freinent le gaz provenant du brûleur. Il y a alors, en aval des picots, une pluralité de zones perturbées, situées dans l'alignement des picots, et une pluralité de zones non perturbées, situées entre les picots. La vitesse du gaz est plus faible dans les zones perturbées que dans les zones non perturbées. Plus la vitesse est élevée, plus les fibres sont fines car elles sont plus étirées et, inversement, plus la vitesse est faible, plus les fibres sont grosses car elles sont moins étirées. Ainsi, lorsque les rangées de picots sont alignées radialement, les fibres sont de taille inhomogène après fibrage.

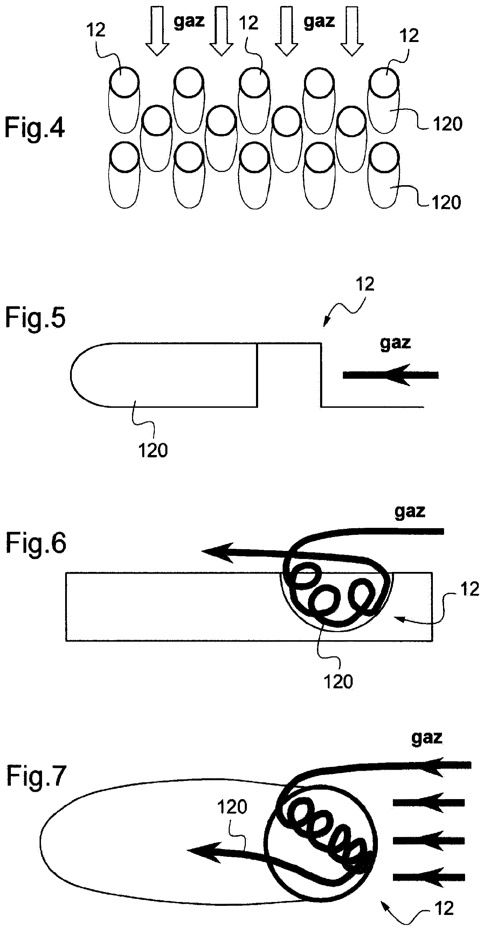

La figure 4 représente une vue de dessus à plat de trois rangées de reliefs discontinus cylindriques, forme non conforme à l'invention. Sur cette figure, les reliefs discontinus de deux rangées adjacentes sont en quinconce. Ce mode de réalisation est préféré à celui de la figure 3. Dans ce mode de réalisation, les turbulences ne se chevauchent pas. En revanche, l'échange thermique est homogène sur toute la surface occupée par les reliefs.

Dans cette configuration, lorsque les reliefs discontinus sont des picots selon un mode de réalisation ne faisant pas partie de l'invention , le gaz est freiné partout de manière homogène. Ainsi, les fibres sont étirées de manière homogène et ont une taille homogène après fibrage.

Dans la configuration des figures 3 et 4, lorsque les reliefs discontinus sont des cavités semi-sphériques, comme par exemple sur les figures 6, 7, 9a et 9b, le gaz d'étirage n'est pas freiné par des obstacles. Donc pour une même température de gaz détirage, les fibres seront plus fines après fibrage avec un centrifugeur muni de cavités semi-sphériques qu'avec un centrifugeur muni de picots.

En revanche, dans le cas des cavités semi-sphériques, l'échange thermique est un peu moins bon que pour les picots, puisque la surface d'échange est moindre. Pour avoir la même température de paroi annulaire, il faut donc chauffer que la température du brûleur soit un peu supérieure à celle nécessaire lorsque les reliefs sont des picots.

La distance entre deux reliefs discontinus adjacents d'une même rangée est de préférence comprise entre 1 mm et 5 mm, par exemple entre 2 et 5 mm, ce qui permet d'empêcher le gaz de passer à proximité des reliefs sans être pris dans une turbulence, en particulier pour le mode de réalisation de la figure 4.

La distance entre deux rangées adjacentes est de préférence comprise entre 1 mm et 5 mm, par exemple entre 2 et 5 mm, ce qui permet un chevauchement des zones de turbulences, en particulier pour le mode de réalisation de la figure 3.

L'échange thermique dépend de plusieurs grandeurs, en particulier :
- de la surface d'échange thermique, donc de la forme et de la hauteur ou de la profondeur des reliefs ;
- du gradient de température, donc de la hauteur du relief et/ou de la hauteur de la zone de turbulence au-dessus de la surface externe du centrifugeur ;
- du coefficient d'échange thermique, qui dépend des dimensions de la zone de turbulence et des forces hydrodynamiques impliquées dans la zone de turbulence.

La figure 5 représente une vue en coupe longitudinale d'un relief discontinu en forme de picot selon un mode de réalisation ne faisant pas partie de l'invention .

Dans ce mode de réalisation, les reliefs discontinus sont en saillie. Ils sont soit usinés dans la surface externe du centrifugeur pendant sa fabrication, soit rapportés et fixés à la surface externe du centrifugeur, par exemple par soudage. Cette dernière solution permet d'adapter un centrifugeur sans relief pour obtenir un centrifugeur selon l'invention.

Plus les picots sont hauts, plus ils permettent de brasser le gaz sur une grande hauteur, ce qui augmente donc le gradient de température. Toutefois, la taille des picots doit être limitée pour ne pas trop freiner le jet d'étirage gazeux afin que les fibres se forment correctement, en particulier lorsque les picots sont disposés en quinconce. De préférence, la hauteur de chaque picot est comprise entre 1 et 5 mm, par exemple entre 2 et 5 mm.

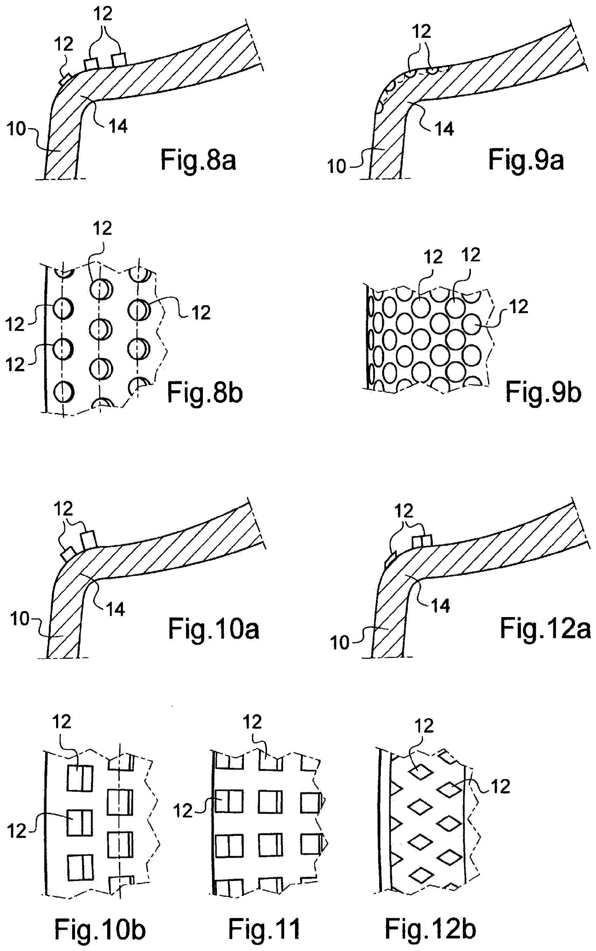

Les picots d'une même rangée ont de préférence tous la même forme. Ils sont de section ronde (comme par exemple sur les figures 8a et 8b), carrée (comme sur les figures 10a, 10b et 11), triangulaire et/ou en losange (comme sur les figures 12a et 12b) ou encore ont une forme pyramidale. La section à mi-hauteur du picot est de préférence comprise entre 1 et 3 mm, par exemple entre 2 et 3 mm. La forme influe grandement sur la surface d'échange thermique.

De préférence, les picots de la rangée qui est la plus proche de la paroi annulaire 10 du centrifugeur 1 sont moins hauts que les picots des autres rangées (comme représenté sur les figures 1, 2, 8a, 10a et 12), afin de limiter le freinage du jet d'étirage gazeux par les picots.

Sur la figure 5, est également représentée la zone de turbulences 120 engendrée par un picot. Elle est située en aval du picot.

La figure 6 représente une vue en coupe transversale d'un relief discontinu en forme de cavité semi-sphérique.

Dans ce mode de réalisation, les reliefs discontinus sont en creux. Ils sont creusés par usinage dans la surface externe du centrifugeur.

Le diamètre de chaque cavité est de préférence compris entre 1 mm et 4 mm, par exemple entre 2 et 4 mm.

Sur la figure 6, est également représentée une zone de turbulences 120 engendrée par une cavité semi-sphérique. On voit que le gaz pénètre dans la cavité semi-sphérique et que la zone de turbulences englobe une certaine hauteur au-dessus de la cavité semi-sphérique et s'étend en aval de la cavité semi-sphérique.

La figure 7 représente une vue de détail de dessus d'un relief discontinu en forme de cavité semi-sphérique.

La figure 7 montre les mouvements de gaz dans et en aval de la cavité se-mi-sphérique.

Les formes et dimensions des reliefs sont adaptées en fonction des conditions de fonctionnement du dispositif de fibrage. Elles dépendent par exemple de l'épaisseur de la paroi du centrifugeur. Les picots selon un mode de réalisation ne faisant pas partie de l'invention peuvent ainsi avoir différentes formes. La forme des picots est un compromis entre la difficulté d'usinage et le résultat recherché en matière de consommation énergétique.

Des centrifugeurs selon différents modes de réalisation ont été testés. Les modes de réalisation suivants ont donné les bons résultats exposés ci-après.

Le mode de réalisation selon un mode de réalisation ne faisant pas partie de l'invention comportant deux rangées de picots de section carrée disposés en quinconce et de hauteur différente (figures 10a et 10b) permet d'améliorer l'échange thermique au niveau des reliefs du centrifugeur de 40% environ.

Le mode de réalisation de l'invention comportant huit rangées de cavités semi-sphériques disposées en quinconce (figures 9a et 9b) permet d'améliorer l'échange thermique au niveau des reliefs du centrifugeur de 20-25%, en fonction du rayon de la cavité.

Les picots permettent en effet un échange thermique plus important entre le jet de gaz provenant du brûleur et la surface externe du centrifugeur que les cavités semi-sphériques. Mais les cavités semi-sphériques permettent de mieux étirer les fibres.

Le mode selon un mode de réalisation ne faisant pas partie de l'invention comportant une rangée de triangles à proximité de la paroi annulaire et deux rangées de losanges disposés en quinconce permet d'améliorer l'échange thermique au niveau des reliefs du centrifugeur de 30% environ.

L'invention concerne un dispositif de formation de fibres minérales, comme expliqué plus haut. Le dispositif comprend le centrifugeur, ainsi qu'un un brûleur annulaire 4 générant un jet d'étirage gazeux à haute température de telle sorte que la sortie 40 du brûleur annulaire est située au-dessus du ou des relief(s) 12 du centrifugeur 1 en position de fibrage et que le jet d'étirage gazeux est tangentiel à la paroi annulaire 10 du centrifugeur 1.

Le jet d'étirage gazeux est adapté à la fois à chauffer le centrifugeur et à étirer les fibres. Le ou les relief(s) permet(tent) d'améliorer le transfert d'énergie entre le gaz du brûleur et le centrifugeur. Ainsi, le dispositif de formation de fibres minérales a une consommation énergétique améliorée.

De plus, étant donné que le transfert d'énergie est amélioré, l'air ambiant est moins chaud, ce qui permet d'augmenter la durée de vie du centrifugeur.

De plus, puisque la puissance du brûleur est diminuée, il y a moins d'air ambiant qui est entraîné par le gaz du brûleur, et il y a besoin de moins d'énergie pour attirer les fibres vers le tapis d'accueil des fibres en vue de leur utilisation ultérieure.

L'invention concerne également un procédé de formation de fibres minérales par centrifugation interne associée à un étirage gazeux à haute température. Ce procédé met en oeuvre le dispositif selon l'invention, où le matériau à fibrer est déversé dans le centrifugeur 1. L'utilisation du centrifugeur selon l'invention permet ainsi d'améliorer la consommation énergétique du procédé.

L'invention concerne également l'utilisation du dispositif selon la revendication 1 ou du procédé suivant la revendication 5. L'utilisation du centrifugeur selon l'invention permet ainsi de fabriquer des fibres minérales de meilleure qualité, puisque la température du jet d'étirage gazeux du brûleur annulaire peut être diminuée, avec une consommation énergétique moindre.

## Revendications

1. Dispositif de formation de fibres minérales comprenant :
un centrifugeur (1), le centrifugeur comprenant :
- un voile (13) formant le dessus du centrifugeur,
- une paroi annulaire (10) percée d'une pluralité d'orifices (11), la paroi annulaire (10) ayant pour axe de symétrie l'axe (9) de rotation,
- au moins une rangée de reliefs discontinus (12), située sur la surface externe du centrifugeur (1), sur la paroi annulaire et/ou au-dessus et à proximité de la paroi annulaire (10) lorsque le centrifugeur (1) est en position de centrifugation, la rangée étant horizontale ou inclinée d'un angle supérieur à 0° et inférieur à 90° par rapport à l'horizontale lorsque le centrifugeur est en position de centrifugation, les reliefs discontinus (12) étant des cavités semi-sphériques,
- dans lequel le centrifugeur comprend au moins deux rangées de reliefs discontinus (12), les rangées étant parallèles entre elles,
et dans lequel les reliefs discontinus (12) de deux rangées adjacentes sont disposés en quinconce,
et le dispositif de formation de fibres minérales comprenant en outre un brûleur annulaire (4) générant un jet d'étirage gazeux à haute température,
la sortie (40) du brûleur annulaire étant située au-dessus des reliefs (12) du centrifugeur (1) en position de fibrage et le jet d'étirage gazeux étant tangentiel à la paroi annulaire (10) du centrifugeur (1).

2. Dispositif de formation de fibres minérales selon la revendication 1, dans lequel la distance entre deux reliefs discontinus (12) adjacents d'une rangée est constante.

3. Dispositif de formation de fibres minérales selon l'une des revendications 1 ou 2, dans lequel le diamètre de la cavité semi-sphérique est compris entre 1 et 4 mm.

4. Procédé de formation de fibres minérales par centrifugation interne associée à un étirage gazeux à haute température, mettant en oeuvre le dispositif selon la revendication 1, dans lequel le matériau à fibrer est déversé dans le centrifugeur (1).

5. Utilisation des fibres minérales obtenues par le dispositif selon la revendication 1 et selon le procédé suivant la revendication 4 pour fabriquer des produits d'isolation thermique et/ou acoustique.

## Patentansprüche

1. Mineralfaserausbildungsvorrichtung, umfassend: eine Zentrifuge (1), die Zentrifuge umfassend:
- eine Abdeckung (13), der die Oberseite der Zentrifuge ausbildet,
- eine ringförmige Wand (10), die von einer Vielzahl von Öffnungen (11) durchbrochen ist, wobei die ringförmige Wand (10) die Drehachse (9) als Symmetrieachse vorweist,
- mindestens eine Reihe von diskontinuierlichen Unebenheiten (12), die sich auf der Außenoberfläche der Zentrifuge (1), auf der ringförmigen Wand und/oder über und in der Nähe der ringförmigen Wand (10) befinden, wenn die Zentrifuge (1) sich in der Zentrifugierposition befindet, wobei die Reihe horizontal oder um einen Winkel größer als 0° und kleiner als 90° zu der Horizontalen geneigt ist, wenn die Zentrifuge sich in der Zentrifugierposition befindet, wobei die diskontinuierlichen Unebenheiten (12) halbkugelförmige Vertiefungen sind,
- wobei die Zentrifuge mindestens zwei Reihen von diskontinuierlichen Unebenheiten (12) umfasst, wobei die Reihen parallel zueinander sind, und wobei die diskontinuierlichen Unebenheiten (12) von zwei benachbarten Reihen versetzt angeordnet sind,
und die Mineralfaserausbildungsvorrichtung ferner einen Ringbrenner (4) umfasst, der einen Gasziehstrahl bei hoher Temperatur erzeugt,
wobei der Auslass (40) des Ringbrenners über den Unebenheiten (12) der Zentrifuge (1) in der Faserziehposition angeordnet ist und der Gasziehstrahl tangential zu der ringförmigen Wand (10) der Zentrifuge (1) verläuft.

2. Mineralfaserausbildungsvorrichtung nach Anspruch 1, wobei der Abstand zwischen zwei benachbarten diskontinuierlichen Unebenheiten (12) einer Reihe konstant ist.

3. Mineralfaserausbildungsvorrichtung nach einem der Ansprüche 1 oder 2, wobei der Durchmesser der halbkugelförmigen Vertiefung zwischen 1 und 4 mm beträgt.

4. Mineralfaserausbildungsvorrichtung durch innere Zentrifugation in Verbindung mit einem Gasziehen bei hoher Temperatur, wobei die Vorrichtung nach Anspruch 1 eingesetzt wird, wobei das Material, aus dem Fasern gezogen werden sollen, in die Zentrifuge (1) geschüttet wird.

5. Verwendung der durch die Vorrichtung nach Anspruch 1 und das Verfahren nach Anspruch 4 erhaltenen Mineralfasern zum Herstellen von Wärme- und/oder Schalldämmungserzeugnissen.

## Claims

1. Device for forming mineral fibers, comprising: a centrifuge (1), the centrifuge comprising:
- a web (13) forming the top of the centrifuge,
- an annular wall (10) pierced with a plurality of holes (11), the annular wall (10) having the rotation axis (9) as its axis of symmetry,
- at least one row of discontinuous reliefs (12), located on the outer surface of the centrifuge (1), on the annular wall and/or above and in the vicinity of the annular wall (10) when the centrifuge (1) is in the centrifugal position, said row being horizontal or inclined by an angle greater than 0° and less than 90° relative to the horizontal when the centrifuge is in the centrifugal position, the discontinuous reliefs (12) being semi-spherical cavities,
- wherein the centrifuge comprises at least two rows of discontinuous reliefs (12), the rows being parallel to one other, and wherein the discontinuous reliefs (12) of two adjacent rows are arranged in staggered fashion,
the device for forming mineral fibers further comprising an annular burner (4) which generates a high-temperature gaseous jet stream,
the outlet (40) of the annular burner being located above the reliefs (12) of the centrifuge (1) in the fiberizing position and the gaseous jet stream being tangential to the annular wall (10) of the centrifuge (1).

2. Device for forming mineral fibers according to claim 1, wherein the distance between two adjacent discontinuous reliefs (12) of a row is constant.

3. Device for forming mineral fibers according to either of claims 1 and 2, wherein the diameter of the semi-spherical cavity is between 1 and 4 mm.

4. Method for forming mineral fibers by internal centrifugation associated with a high-temperature gas stream, using the device according to claim 1, wherein the material to be fiberized is poured into the centrifuge (1).

5. Use of the mineral fibers obtained by the device according to claim 1 and according to the method pursuant to claim 4 for manufacturing thermal and/or acoustic insulation products.
